# EUROPÄISCHE PATENTSCHRIFT

(11) **EP 0 946 409 B1**
(45) Veröffentlichungstag und Bekanntmachung des Hinweises auf die Patenterteilung: **08.01.2003**
(21) Anmeldenummer: 97945830.4
(22) Anmeldetag: 15.10.1997
(51) Int. Cl.: C01B 15/029

(54) **VERFAHREN ZUR HERSTELLUNG VON WASSERSTOFFPEROXID**
PROCESS FOR THE MANUFACTURE OF HYDROGEN PEROXIDE
PROCEDE DE PRODUCTION DE PEROXYDE D'HYDROGENE

(30) Priorität: 16.10.1996 DE 19642770
(43) Veröffentlichungstag der Anmeldung: 06.10.1999
(73) Patentinhaber: BASF AKTIENGESELLSCHAFT, 67056 Ludwigshafen (DE)
(72) Erfinder: FISCHER, Martin, D-67071 Ludwigshafen (DE); KAIBEL, Gerd, D-68623 Lampertheim (DE); STAMMER, Achim, D-67251 Freinsheim (DE); FLICK, Klemens, D-76863 Herxheim (DE); QUAISER, Stefan, D-67117 Limburgerhof (DE); HARDER, Wolfgang, D-69469 Weinheim (DE); MASSONNE, Klemens, D-67368 Westheim (DE)
(74) Vertreter: Kinzebach, Werner, Dr.
(86) Internationale Anmeldenummer: EP9705659
(87) Internationale Veröffentlichungsnummer: WO98016463

(56) Entgegenhaltungen:
- EP-A- 0 049 806
- EP-A- 0 537 836
- EP-A- 0 627 381
- WO-A-92/15520
- WO-A-92/15521
- WO-A-93/14025
- SCAROS ET AL (EDS): "Catalysis of organic reactions" 1995 , MARCEL DEKKER INC , NEW YORK XP002056449 in der Anmeldung erwähnt siehe Seite 115 - Seite 124

## Beschreibung

Die vorliegende Erfindung betrifft ein Verfahren zur Herstellung von Wasserstoffperoxid-Lösungen mit einem Wasserstoffperoxid-Gehalt von wenigstens 2,5 Gew%, durch Umsetzung von Wasserstoff und Sauerstoff nach einem kontinuierlichen Verfahren an Katalysatoren, die als aktive Komponente Palladium enthalten.

Übliche industrielle Verfahren für die Herstellung von Wasserstoffperoxid sind die Elektrolyse saurer Ammoniumsulfatlösungen, die Oxidation von Isopropylalkohol oder das Anthrachinonverfahren. Die direkte Synthese von Wasserstoffperoxid aus den Elementen an Übergangsmetallkatalysatoren ist bekannt, hat jedoch bislang keine kommerzielle Verwendung gefunden.

Dies ist auf mehrere Gründe zurückzuführen. So bilden Wasserstoff und Sauerstoff explosive Gasgemische, wenn der Gehalt an Wasserstoff in der Gasmischung oberhalb 5 Vol.% liegt. Andererseits ist die Bildungsgeschwindigkeit von Wasserstoffperoxid bei Verwendung von Wasserstoff/Sauerstoff-Mischungen außerhalb des explosiven Bereichs in der Regel zu gering, um vernünftige Raum-Zeit-Ausbeuten zu gewährleisten. Zudem kann ein zu hoher Gehalt an Sauerstoff im Reaktionsgas den oxidativen Abbau der Katalysatoren beschleunigen.

Ein weiteres Problem stellt die Selektivität der Reaktion dar. So steht die Bildungsreaktion des Wasserstoffperoxids in Konkurrenz zur Bildung von Wasser. Zudem katalysieren die für die Bildung von Wasserstoffperoxid aus den Elementen geeigneten Katalysatoren auch die Abbaureaktion des Wasserstoffperoxids in Gegenwart von überschüssigem Wasserstoff entsprechend folgender Reaktionsgleichung: H₂O₂ + H₂ → 2H₂O. Dieses Selektivitätsproblem kann dadurch gelöst werden, daß man nach kontinuierlichen Verfahren mit hohen Durchflußgeschwindigkeiten arbeitet. Dies hat jedoch zur Folge, daß bei niedriger Reaktionsgeschwindigkeit die im Austrag erhaltenen Wasserstoffperoxid-Konzentrationen für eine wirtschaftliche Nutzung dieses Verfahrens zu gering werden. Außerdem treten bei zu hohen Fließgeschwindigkeiten Abrasionsprobleme am Katalysator auf, was zu verkürzten Standzeiten und damit ebenfalls zu wirtschaftlichen Nachteilen dieses Verfahrens führt.

Die US-4,009,252 offenbart für die Bildung von Wasserstoffperoxid aus Wasserstoff und Sauerstoff an palladiumhaltigen Katalysatoren ein optimales Verhältnis von O₂ zu H₂ im Bereich von 1,5:1 bis 20:1, also im Explosivbereich. Die Umsetzung erfolgt nach dem Batchverfahren, die erreichten Raum-Zeit-Ausbeuten sind nicht zufriedenstellend.

Scaros et al. (eds): "Catalysis of organic reactions", 1995, Marcel Dekker Inc., New York, S. 115-124, J. Kosak, beschreibt die Umsetzung von Wasserstoff und Sauerstoff an palladium-haltigen Katalysatoren in form eines Monoliths in wässriger Lösung.

Die WO 92/04277 beschreibt die Umsetzung von Wasserstoff mit Sauerstoff in einem mit wässriger Katalysatorsuspension gefüllten Rohrreaktor. Die verwendeten Gasgemische liegen vorzugsweise im Explosionsbereich. Durch eine hohe Strömungsgeschwindigkeit des Reaktionsmediums (> 1m/sek) wird gewährleistet, daß das Reaktionsgas in Form kleiner Blasen vollständig im Reaktionsmedium dispergiert ist, so daß ein explosionsartiges Abreagieren des Reaktionsgases nicht möglich ist. Die nach einmaligem Durchlauf der Reaktionszone erhaltenen Wasserstoffperoxidkonzentrationen liegen unterhalb 1 Gew%. Höhere Ausbeuten können nur durch mehrmaliges Durchlaufen der Reaktionszone erreicht werden. Als problematisch erweist sich, daß der Katalysator in Form einer Suspension verwendet wird. Dies erfordert aufwendige Filtrations- und Rückführungsmaßnahmen, wobei Katalysatorverluste unvermeidbar sind. Reaktionsrohre, die für den erforderlichen Reaktionsdruck geeignet sind - in den Beispielen werden Druckwerte oberhalb 80 bar offenbart - sind vergleichsweise teuer. Das genannte Verfahren ist daher als sehr teuer einzustufen. Ein ähnliches Verfahren mit verbesserter Verwirbelung der Wasserstoff- und Sauerstoffströme ist in der WO 96/05138 beschrieben.

Die US-A 5,500,202 und die EP-A 579 109 beschreiben ein kontinuierliches Verfahren zur Herstellung von Wasserstoffperoxid durch Umsetzung von H₂/O₂-Gasmischungen an einem stationären, pulverförmigen Katalysator (Teilchengrößen im Bereich von 10 µm bis 250 µm) in einem Rieselbett-Reaktor. Um das Explosionsrisiko bei dem in einem Rieselbettreaktor üblicherweise großen Gasvolumen zu verringern, wird dem Reaktionsgas Stickstoff als Inertgas zugeführt. Dies verursacht jedoch zusätzliche Kosten. Die auf diesem Wege erhaltenen wässrigen Wasserstoffperoxid-Lösungen weisen lediglich Konzentrationen im Bereich von 3 bis 5 Gew% auf. Der Umsatz bezogen auf Wasserstoff liegt lediglich im Bereich von 25 - 35%. Über die Lebensdauer des Katalysators werden keine Angaben gemacht. Wegen der starken Wärmeentwicklung werden Reaktoren mit einem maximalen. Innendurchmesser von 30 mm empfohlen. Für eine industriell e Nutzung müßten daher mehrere 1000 dieser Rohrreaktoren install iert werden, was hohe Investitionskosten mit sich bringt.

Die US-A 4,336,238 und US-A 4,336,239 beschreiben die Umsetzung von Wasserstoff und Sauerstoff zu Wasserstoffperoxid an palladiumhaitigen Katalysatoren in organischen Lösungsmitteln oder Lösungsmittelmischungen, die gegebenenfalls auch Wasser enthalten. Durch das beschriebene Verfahren kann der Anteil an Wasserstoff im Reaktionsgas gesenkt werden, jedoch sind die erhaltenen Wasserstoffperoxidkonzentrationen von maximal 2,4 Gew% bei Verwendung von Reaktionsgasmischungen, die weniger als 5 Vol% Wasserstoff enthalten, für eine wirtschaftliche Anwendung zu gering. Die Verwendung organischer Lösungsmittel wirkt sich vorteilhaft auf die Katalysatorlebensdauer aus. Nach 285 Stunden Betriebsdauer ist die Kataysatoraktivität allerdings auf 69% des ursprünglichen Wertes gesunken, was für eine industrielle Anwendung immer noch zu gering ist. Die US-A 4,389,390 beschreibt ein ähnliches Verfahren, wobei der Katalysator, der sich vom Träger gelöst hat, durch Aktivkohlefilter zurückgewonnen wird. Ein weiterer Vorteil dieses Verfahrens ist darin zu sehen, daß durch Entfernung des Katalysators aus dem Reaktionsmedium die Neigung des Wasserstoffperoxids zur Zersetzung verringert wird. Jedoch werden im kontinuierlichen Betrieb keine Wasserstoffperoxidlösungen mit einem Gehalt oberhalb 2,1 Gew% erhalten.

Hinsichtlich des Problems der Katalysatordesaktivierung bei der Herstellung von Wasserstoffperoxid aus den Elementen finden sich in der Literatur verschiedene Lösungsvorschläge. So beschreiben die US-A 5,352,645 und die WO 92/04976 spezielle feste Träger aus sprühgetrocknetem, kolloidalen Kieselgel. Die Verwendung superazider Oxide als Trägermaterialien wird in der US 5,236,692 sowie in der EP-A 437 836 vorgeschlagen. Hierdurch kann der übliche Säureanteil des Reaktionsmediums vermieden werden. Die EP-A 627 381 lehrt die Verwendung von Niob-, Tantal-, Molybdän- oder Wolframoxiden als Trägermaterialien, die sich durch hohe Säurefestigkeit auszeichnen. Die US-A 5,292,496 beschreibt die Verwendung von Cer-haltigen Trägermaterialien, um so die Verwendung von Halogen als Stabilisator im Reaktionsmedium zu vermeiden. Die Herstellung des Wasserstoffperoxids erfolgt in den genannten Schriften jedoch immer nach Batch- oder halbkontinuierlichen Verfahren, die für eine industrielle Nutzung wenig geeignet sind. Zudem lassen die kurzen Reaktionszeiten keine Aussage über die Lebensdauer der Katalysatoren zu.

Die Verwendung von Katalysatormonolithen, die als aktive Komponente Palladium enthalten, wird von Kosak in "Catalysis of Organic Reactions (Scaros und Prunier, Hrsg.), Marcel Dekker Inc., New York 1995, S. 115ff, für die Herstellung von Wasserstoffperoxid aus den Elementen beschrieben. Die Umsetzung erfolgt diskontinuierlich in einem wässrigen Reaktionsmedium bei einem vergleichsweise hohen Druck von 144 bar und einem moalren Verhaltnis von O₂:H₂ = 4,7, also im Explosionsbereich.

Der vorliegenden Erfindung liegt die Aufgabe zugrunde, ein Verfahren für die Herstellung von Wasserstoffperoxid aus Wasserstoff und Sauerstoff bereitzustellen, das es auch bei Verwendung von Wasserstoff/Sauerstoff-Mischungen außerhalb des Explosiv-Bereiches (O₂:H₂>20:1) erlaubt, Wasserstoffperoxid-Lösungen mit einem Gehalt oberhalb 2,5 Gew% herzustellen. Die verwendeten Katalysatoren sollen hohe Standzeiten aufweisen.

Diese Aufgabe konnte gelöst werden durch ein kontinuierliches Verfahren, das die Umsetzung von Wasserstoff und Sauerstoff in Wasser und/oder C₁-C₃-Alkanolen als Reaktionsmedium an Katalysatorformkörpern, die als aktive Komponente Palladium enthalten, umfaßt.

Die vorliegende Erfindung betrifft somit ein Verfahren zur Herstellung von Wasserstoffperoxid-Lösungen mit einem Wasserstoffperoxid-Gehalt von wenigstens 2,5 Gew%, durch kontinuierliche Umsetzung von Wasserstoff und Sauerstoff an Katalysatoren, die als aktive Komponente Palladium enthalten, das dadurch gekennzeichnet ist, daß die Umsetzung in Wasser und/oder C₁-C₃-Alkanolen als Reaktionsmedium an Katalysatorformkörpern in Form geordneter, in den Reaktor eingebauter Katalysatoren erfolgt, wobei das Reaktionsgas, enthaltend Sauerstoff und Wasserstoff, im Gleichstrom mit der flüssigen Reaktionsphase durch den Reaktor geführt wird.

Unter Katalysatorformkörpern sind Katalysatoren zu verstehen, bei denen die katalytisch aktive Komponente sich auf der Oberfläche speziell geformter Träger befindet. Derartige Träger können übliche Füllkörper, wie Raschig-Ringe, Sattelkörper, Pall@-Ringe, Drahtspiralen oder Maschendrahtringe sein, die aus unterschiedlichen Materialien, die sich für eine Beschichtung mit der aktiven Komponente eignen (siehe auch Römpp-Chemie-Lexikon, 9. Aufl., S. 1453f.) aufgebaut sind. Die mit der katalytisch aktiven Komponente versehenen Füllkörper werden als lose Schüttung in den Reaktor gegeben. Bevorzugte Formkörper weisen Kanäle mit hydraulischen Radien (Definition siehe VDI-Wärmeatlas, Abschnitt LE1) im Bereich von 1 bis 10 mm auf.

Erfindungsgemäß werden Katalysatorformkörper, die in Form geordneter Packungen in den Reaktor eingebaut werden und die aufgrund einer Vielzahl von Durchströmungskanälen eine große Oberfläche, bezogen auf ihr Volumen, aufweisen, verwendet. Derartige Formkörper werden im folgenden als Katalysatormonolithe bezeichnet. Geeignete Reaktoren sind beispielsweise in den EP-A 068 862, EP-A 201 614 und der EP-A 448 884 beschrieben.

Die Katalysatormonolithe bzw. die monolithischen Träger sind in der Regel aus Geweben, Gestricken, Folien, Streckmetallen und/oder Blechen aufgebaut. Monolitische Träger können auch, wie in der US-A 4,364,888 und der US-A 4,333,896 beschrieben, durch Extrusion hergestellt werden. Als monolithische Träger sind auch Formkörper geeignet, die aus offenzelligen Schäumen aufgebaut sind. Diese Schäume können beispielsweise aus Keramik, Melaminharzen oder Polyurethan bestehen.

Bevorzugt werden Katalysatormonolithe, die aus Geweben aufgebaut sind, da diese im Reaktor vom flüssigen Reaktionsmedium besonders gut durchströmt werden und somit hohe Umsatzgeschwindigkeiten ermöglichen.

Geeignete Gewebe sind beispielsweise aus Fasern oxidischer Materialien, wie Al₂O₃ und/oder SiO₂, oder aus Kunststoffasern, wie z.B. Polyamid-, Polyester-, Polyvinylchlorid-, Polyethylen-, Polypropylen-, Polytetraflurethylenfasern oder Kohlefasern aufgebaut. Bevorzugt werden gewebeförmige Katalysatorträger, die aus webbaren Metalldrähten, beispielsweise aus Eisen, Federstahl, Hastelloy, Monel, Silber, Chromstahl, Chromnickelstahl oder Titan, aufgebaut sind. Ganz besonders bevorzugt werden gewebeförmige Katalysatorträger, die aus webbaren Drähten hochlegierter Edelstähle oder Metalle, die sich durch Ausbildung einer Passivierungsschicht vor weiterer Korrosion schützen, aufgebaut sind, beispielsweise Cr-Stähle, CrNi-Stähle, CrNiTi-Stähle und CrNiMo-Stähle oder hitzebeständige Stähle mit den Werkstoffnummern 1.4016, 1.4767, 1,4401, 2.4610, 1.4765, 1.4847, 1.4301, 1.4742.

Aus den genannten Drähten und Fasern lassen sich Gewebe unterschiedlicher Webart herstellen, wie glatte Gewebe, Köpergewebe, Tressengewebe, Fünfschaft-Atlas-Gewebe und andere Spezialbindungsgewebe. Bevorzugt werden diese Gewebe zu mehrlagigen Gewebeverbänden zusammengefasst. Geeignete gewebeförmige, monolithische Katalysatorträger sind in der EP-A 498 435 beschrieben.

Besonders geeignete Katalysatormonolithe sind aus mehreren Lagen gewellter, geknickter und/oder glatter Gewebe aufgebaut, die so angeordnet sind, daß benachbarte Lagen mehr oder weniger abgeschlossene Kanäle bilden. Der hydraulische Durchmesser der Kanäle liegt vorzugsweise im Bereich von 1 bis 10 mm, insbesondere von 1,5 bis 3 mm (gemäß Definition in VDI-Wärmeatlas, Abschnitt LE1). Diese Kanäle können gerade oder gebogen sein. Bevorzugt werden mehrlagige Gewebe, in denen sich glatte und gewellte bzw. geknickte Gewebe abwechseln. Monolithe, in denen die Gewebe teilweise oder vollständig durch Bleche, Gestricke oder Streckmetalle ersetzt sind, können ebenfalls verwendet werden. Derartige Monolithe werden bevorzugt so in den Reaktor eingebaut, daß die Kanäle gegen die Durchströmungsrichtung des Reaktionsmediums geneigt sind. Die Gewebelagen selber werden vorzugsweise parallel zur Strömungsrichtung im Reaktor eingebaut. Sind mehrere dieser Baueinheiten nacheinander geschaltet, erfolgt ihr Einbau vorzugsweise so, daß die Durchströmungskanäle gegen die Strömungsrichtung alternierend in entgegengesetzte Richtungen geneigt sind. Die Baueinheiten werden vorzugsweise so eingebaut, daß die Gewebelagen zweier aufeinanderfolgender Baueinheiten einen Winkel von vorzugsweise etwa 90° zueinander einnehmen. Wickelmodule aus gewellten oder geknickten und gegebenenfalls auch ebenen Gewebelagen sind ebenfalls geeignet.

Die Beschichtung der Katalysatorträger mit der katalytisch aktiven Komponente erfolgt nach den für sie üblichen Methoden (s.u.). Bei monolithischen Trägern, die aus Geweben, Folien, Blechen, Gestricken oder Streckmetallen aufgebaut sind, erfolgt die Beschichtung in der Regel vor der Weiterverarbeitung zum Katalysatormonolithen. Sie kann jedoch auch am vorgeformten Träger erfolgen. Sollen die Gewebe in Einsatzrahmen gespannt und gegebenenfalls anschliessend zu Katalysatorzellen zusammengefügt werden, empfiehlt es sich, die Beschichtung der Gewebe im nichtverarbeiteten Zustand vorzunehmen.

Die katalytisch aktive Komponente kann neben Palladium als Hauptbestandteil weitere Metalle, vorzugsweise Edelmetalle und insbesondere Platin, Rhodium, Iridium, Kupfer, Silber und/oder Gold als Promotoren enthalten. Das Verhältnis Palladium/Promotormetall liegt vorzugsweise im Bereich von 100:1 bis 1:10 und insbesondere im Bereich von 10:1 bis 1:1. Das Palladium sowie die gegebenenfalls anwesenden Promotormetalle machen in der Regel 5 x 10⁻⁴ bis bis 1 Gew% und insbesondere 10⁻³ bis 0,15 Gew% bezogen auf die gesamte Katalysatormasse (Träger + aktive Komponente) aus.

Bei Katalysatorträgern mit poröser Oberfläche, wie sie beispielsweise Katalysatorträger mit Oberflächen aus aktivem Aluminiumoxid oder SiO₂ aufweisen, wird die aktive Komponente in der Regel durch einen Imprägnierung- oder Tränkungsschritt, dem in der Regel ein Trocknungs- und Aktivierungsschritt folgt, aufgebracht. Derartige Techniken sind beispielsweise in der DE-A 22 56 195 oder in der DE-A 23 17 560 beschrieben, auf die hier in vollem Umfang Bezug genommen wird. Ebenfalls geeignet sind Katalysatoren, bei denen auf einem Metallträger eine aktive Aluminiumoxidschicht und anschließend ein Überzug aus Palladium aufgebracht wird. Die Oxidschicht wird durch Tauchen des Trägers in eine Dispersion aus aktivem Aluminiumoxid und anschließender Temperung bei erhöhter Temperatur hergestellt. Auf diese Oxidschicht wird anschließend durch Tränken mit einer Palladiumsalzlösung das Edelmetall aufgebracht und dieses nach Trocknung durch Reduktion mit Wasserstoff bei 500°C aktiviert. Dieses Verfahren ist in der EP-A 075 124 offenbart, auf die hier ebenfalls in vollem Umfang Bezug genommen wird. Die DE-A 41 13 525 beschreibt ein Verfahren zur Beschichtung von Oberflächen in komplexen geometrischen Gebilden mit Edelmetallen, indem man in einem ersten Schritt die Gebilde mit einer Lösung, die Komplexe der Metalle mit organischen Liganden enthält, benetzt und anschließend diese Komplexe durch UV-Bestrahlung zerstört. Auf diese Weise lassen sich Netze, Fliese, Fasern, Körper mit wabenförmiger, schwammartiger oder poröser Struktur, unabhängig von der chemischen Beschaffenheit der Oberfläche, mit stabilen Edelmetallbeschichtungen versehen. Auch dieses Beschichtungsverfahren ist für die Herstellung der erfindungsgemäßen Katalysatormonolithe geeignet. Erfindungsgemäß geeignete Beschichtungen lassen sich auf die in der EP-A 374 099 beschriebene Weise durch Tränken des Katalysatorträgers mit geeigneten Palladium(0)komplexen und anschließende Thermolyse dieser Komplexe erhalten. Reetz et al. (Angew. Chem. 1995, 107, 2956-2958) beschreibt die Beschichtung von SiO₂- oder Al₂O₃-Oberflächen mit präformierten Palladiumclustern. Auf diese Weise werden auch bei porösen Oberflächen sehr dünne Schichten der aktiven Komponente (Eggshell-Katalysatoren), erhalten. Auch auf diese Weise sind erfindungsgemäß geeignete Katalysatormonolithe herstellbar. Das Aufbringen von Metallen auf thermisch stabile Katalysatorträger kann auch nach dem Verfahren des Flammspritzens erfolgen (s. P. Fauchais et al. in Pure and Appl. Chem., Vol. 66, 1994, 1247-1258). Das Aufbringen der katalytisch aktiven Komponente kann auch durch Aufdampfen von Metallen auf den Katalysatorträger im Vakuum erfolgen. Als Vakuumverdampfungstechniken kommen insbesondere die thermische Verdampfung, die Flash-Verdampfung, die Kathodenzerstäubung sowie Sputtern in Frage. Die thermische Verdampfung kann durch direkte oder indirekte elektrische Heizung erfolgen. Vorzugsweise benutzt man die Elektronenstrahlverdampfung für diese Methode. Die erfindungsgemäßen, gewebeförmigen Katalysatorträger können nach diesen Verfahren kontinuierlich oder diskontinuierlich beschichtet werden. Wegen weiterer Details wird auf die EP-A 198 435 verwiesen. Das in der DE-A 41 21 418 beschriebene Verfahren zum Aufbringen von Pd- oder Pt-Legierungen auf Metalloberflächen ist für die Herstellung der erfindungsgemäßen Katalysatoren ebenfalls geeignet.

Vorzugsweise werden Palladium sowie gegebenenfalls die Promotoren durch elektrolytische, insbesondere durch elektrochemische Abscheidimg aus entsprechenden Metallsalz-Lösungen auf den Katalysatorträger aufgebracht. Als Reduktionsmittel eignen sich insbesondere Hydrazin, Zitronensäure, Ethanol, Salze der hypophosphorigen Säure, z.B. NaH₂PO₂, Formaldehyd, Ameisensäure, Boranate wie Natriumborhydrid, oder stabilisierte Boranlösungen wie z.B. Komplexe des Borans mit Diethylether, Diethylamin oder Diethylamin (s. auch A. Laus in Mater. Sci.Eng. A 146 (1991) 33,49; s. auch Dechema-Tagungsbericht XXIX. Jahrestreffen deutscher Katalytiker, Friedrichroda, März 1996, S. 66).

Hierbei empfiehlt es sich, den Katalysatorträger vorzubehandeln, um die Haftung der aktiven Komponente auf der Trägeroberfläche zu verbessern. Hierzu zählen beispielsweise die Entfernung von Fetten oder ähnlichen Substanzen, die die gewünschte Oberflächenhaftung behindern, beispielsweise durch Spülen mit organischen Lösungsmitteln wie Ether, Aceton oder Halogenkohlenwasserstoffen, oder das Glühen. Oxidschichten auf metallischen Trägern können auch durch Behandlung mit Mineralsäuren, z.B. Salzsäure oder Schwefelsäure, entfernt werden. Durch das hierbei erzielte "Aufrauhen" der metallischen Oberfläche wird die Zementierung der Aktivkomponente, insbesondere bei elektrolytischer oder elektrochemischer Abscheidung, verbessert.

Die durch die beschriebenen Verfahren erhaltenen Katalysatorsysteme aus Träger und Aktivkomponente/Promotoren können anschließend durch thermische Behandlung bei Temperaturen von 200 bis 900°C, vorzugsweise 400 bis 700°C, formiert werden. Diese thermische Nachbehandlung kann sowohl in oxidierender, inerter oder auch reduzierender Atmosphäre ablaufen. Besonders bei polymetallischen Systemen wird eine Formierung in reduzierender Atmosphäre bevorzugt, da hierbei leichter Legierungen ausgebildet werden.

Die fertigen Katalysatorsysteme werden dann im Reaktionsraum fixiert eingebaut (s.o.). Besonders bevorzugt werden Rohrreaktoren, in denen zylindrisch aufgebaute Katalysatoreinheiten eingepaßt sind, da sich hier eine gleichmäßige Strömung ausbilden kann, was eine besonders gute Reaktionsführung erlaubt.

Die Durchführung der Reaktion erfolgt in der Regel bei geflutetem Reaktor. Als Reaktionsmedium dient Wasser und/oder C₁-C₃-Alkanole, vorzugsweise Wasser und/oder Methanol. Wenn als Reaktionsmedium Wasser verwendet wird, kann diesem bis zu 20 Gew.-% des Alkohols, vorzugsweise Methanol, zugesetzt werden. Wird ein alkoholisches Reaktionsmedium eingesetzt, kann dieses zu 40 Gew%, vorzugsweise bis zu 20 Gew% und besonders bevorzugt bis zu 5 Gew% Wasser enthalten. Ganz besonders bevorzugt wird Wasser als alleiniges Reaktionsmedium verwendet. Zur Stabilisierung des Wasserstoffperoxids gegen Zersetzung werden dem Reaktionsmedium Säuren, deren pKa-Wert vorzugsweise kleiner als der der Essigsäure ist, insbesondere Mineralsäuren wie Schwefelsäure, Phosphorsäure oder Salzsäure, zugesetzt. Die Säurekonzentration beträgt in der Regel wenigstens 10⁻⁴ Mol/Liter, vorzugsweise 10⁻³ bis 10⁻¹ Mol/Liter. Weiterhin werden in der Regel noch Spuren von Bromid oder Chlorid in Konzentrationen von 1 bis 1000 ppm, vorzugsweise 5 bis 300 ppm zugesetzt. Es können aber auch andere Stabilisatoren, wie z.B. Formaldehyd verwendet werden.

Das Reaktionsgas, das neben Wasserstoff und Sauerstoff auch noch inerte Gase wie Stickstoff oder Edelgase enthalten kann, weist in der Regel O₂:H₂-Verhältnisse im Bereich von 2:1 bis 1000:1 auf. Bevorzugt werden Molverhältnisse im Bereich von 5:1 bis 100:1 und besonders bevorzugt im Bereich von 20:1 bis 50:1. Der im Reaktionsgas verwendete Sauerstoff kann auch in Form von Luft dem Reaktionsgas zugemischt werden.

In einer bevorzugten Ausführungsform wird das Reaktionsgas im Kreis geführt. In diesem Fall liegt das Molverhältnis im Frischgasgemisch in der Nähe der Stöchiometrie, vorzugsweise im Bereich von 1,5:1 bis 0,5:1. Das Molverhältnis O₂:H₂ im Kreisgas sollte im Bereich von 5:1 bis 1000:1, vorzugsweise im Bereich von 20:1 bis 100:1 liegen. Die Reaktion kann bei Normaldruck als auch bei Überdrucken bis zu 200 bar durchgeführt werden. Vorzugsweise beträgt der Druck 10 bis 100 bar, insbesondere 10 bis 80 bar. Die Reaktionstempertur kann im Bereich von 0 bis 60°C liegen, vorzugsweise wird im Bereich von 20 bis 50°C gearbeitet. Vorzugsweise werden die Partialdrücke der Reaktionsgase in der Reaktionsgasmischung im Reaktor als auch im Kreisgas so gewählt, daß unter Reaktionsbedingungen die Wasserstoffkonzentration sich unterhalb der unteren Explosionsgrenze befindet.

Reaktionsgas und Reaktionsmedium werden im Gleichstrom zueinander geführt, wöbei vorzugsweise die flussige Phase die kontinuierliche und das Reaktionsgas die diskontinuierliche Phase bildet. Bei dem bevorzugten vertikalen Reaktoraufbau (stehender Reaktor) werden Reaktionsgas und Reaktionsmedium vorzugsweise im Gleichstrom von unten nach oben durch den Reaktor geführt. Hierbei kann Wasserstoff über ein oder mehrere Zwischeneinspeisungen stromabwärts vom Einspeisungspunkt des Sauerstoffs oder der-Luft dem Reaktor zugeführt werden. Die Leerrohrgeschwindigkeit von Reaktionsgas und Reaktionsmedium liegt im Bereich von 50 bis 1000 m/h, vorzugsweise im Bereich von 150 bis 300 m/h.

Durch das beschriebene Verfahren lassen sich Wasserstoffperoxidlösungen mit Wasserstoffgehalten oberhalb 2,5 Gew%, vorzugsweise im Bereich von 5 bis 25 Gew% herstellen. Die Konzentration kann durch Einstellung der Stoffströme in der gewünschten Weise voralwählt werden. Die Selektivität der Wasserstoffperoxidbildung liegt dabei stets oberhalb 65%, vorzugsweise ≥ 75%. Langzeituntersuchungen haben gezeigt, daß auch nach mehr als 40 Tagen Betriebsdauer keine oder nur eine geringfügige Abnahme der Katalysatoraktivität und Selektivität zu verzeichnen ist.

Weitere Einzelheiten sind in den Ansprüchen zu sehen.

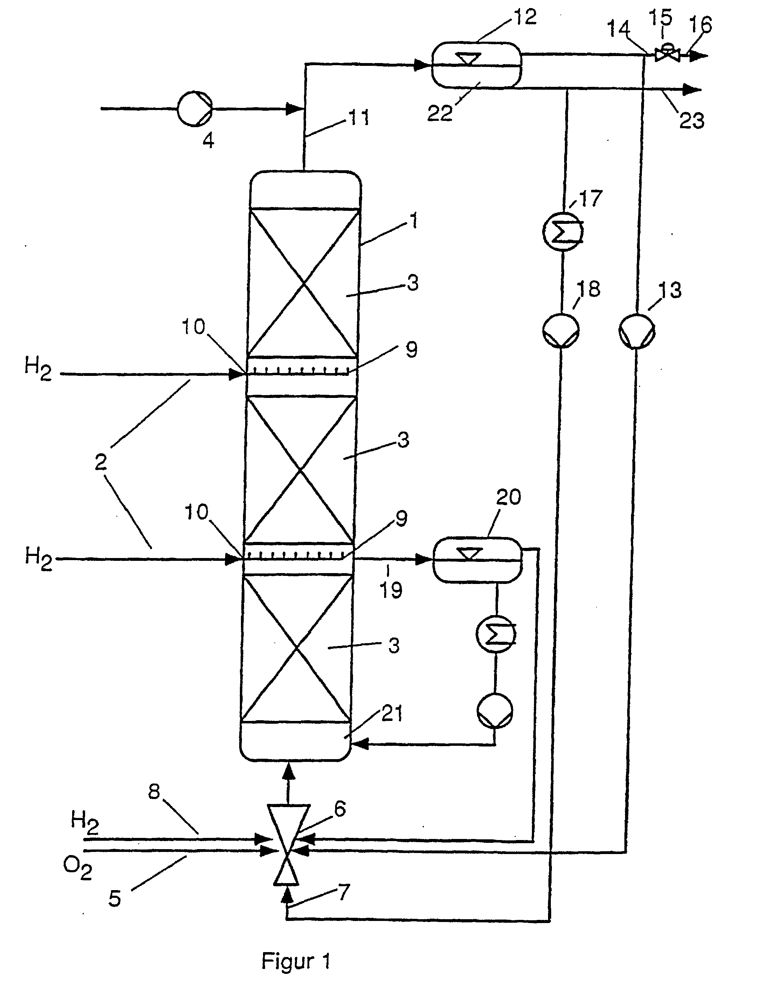

Figur 1 zeigt beispielhaft ein Reaktorsystem mit dem stehend angeordneten Reaktor 1, in dem mehrere durch Zwischeneinspeisungen 2 von Wasserstoff getrennte Schichten 3 von gewebeförmig aufgebauten Katalysatormonolithen montiert sind. Über die Pumpe 4 wird Methanol und/oder Wasser zugeführt. Über die Anschlußleitung 5 wird Sauerstoff zugefahren und mit einem Gas-Flüssig-Verteiler, z.B. einer Mischdüse 6, in der Kreisflüssigkeit 7 blasenförmig verteilt. In der gleichen Mischdüse 6 - gegebenenfalls kann auch eine separate Mischdüse verwendet werden - wird ein Teilstrom 8 des Wasserstoffs zugefahren. Weitere Teilmengen 2 an Wasserstoff werden mengengeregelt über Verteilereinrichtungen 9 an den Zwischeneinspeisungsstellen 10 zwischen den Katalysatorschichten 3 zugefahren. Am oberen Ende des Reaktors wird der zweiphasige Reaktoraustrag 11 entnommen und in einem Trenngefäß 12 getrennt. Die Gasphase wird über einen Verdichter 13 - oder bei geringer Bauhöhe des Reaktors bevorzugt direkt - über die Mischdüse 6 am unteren Ende des Reaktors wieder zugegeben. Ein Teilstrom 14 des Gases wird zur Begrenzung der Anreicherung von Inertbestandteilen über eine Druckhaltung 15 in die Abgasleitung 16 geführt. Die Flüssigkeit wird über einen Wärmetauscher 17 mit Kühlwasser gekühlt und über die Pumpe 18 wieder am unteren Ende des Reaktors zugefahren. Zusätzlich ist es auch möglich, Zwischenentnahmen 19 des zweiphasigen Reaktorinhalts längs des Reaktors vorzusehen, eine Phasentrennung 20 durchzuführen und beide Phasen - die Flüssigphase gekühlt - wieder an einer tieferen Stelle 21 des Reaktors zuzufahren. Das flüssige Reaktionsprodukt 22 wird als Teilstrom 23 dem Phasenscheider 12 am oberen Ende des Reaktors entnommen.

Die vorliegende Erfindung wird durch die folgenden Beispiele erläutert, ohne sie jedoch einzuschränken.

### I. Herstellung von Katalysatorformlingen mit Katalysatorträgern aus V4A-Gewebe.

Ein gewelltes und ein glattes Netz aus V4A-Stahl (1.4571, Maschenweite 180 µm, Drahtdurchmesser 146 µm) wurde aufeinander gelegt und zu einem zylinderförmigen Monolith mit einer Höhe von 5 cm und einem Durchmesser von ebenfalls 5 cm gerollt. Die Enden der Netze wurden durch Schweißpunkte fixiert. Der Netzebenenabstand der glatten Netze betrug wenigstens 1 mm.

Der monolithische Träger wurde sukzessive mit Aceton und destilliertem Wasser behandelt und anschließend getrocknet. Danach wurde der Monolith mit einer Lösung aus 25 Gew% konzentrierter Salzsäure und 75 Gew% destilliertem Wasser 30 Minuten bei 60°C behandelt und mit destilliertem Wasser abgespült. Der so behandelte Monolith wurde in 150 ml destilliertem Wasser vorgelegt. Nach Zugabe von 10 Tropfen konzentrierter HNO₃ und 36 ml einer 1 gew%igen wässrigen Lösung von hypophosphoriger Säure wurden 20 ml einer Palladiumnitratlösung mit einer Palladiumkonzentration von 1 Gew% zugegeben. Hiernach wurde zuerst 17 Minuten auf 60°C und dann eine Stunde auf 80°C erwärmt. Anschließend ließ man abkühlen, wusch den Katalysatormonolith mit destilliertem Wasser und trocknete ihn 16 Stunden bei 120°C.

### II. Herstellung von Wasserstoffperoxid

Als Reaktionsgefäß dient ein 270 ml Autoklav mit Rührer, Thermostatisierung und Druckhaltung von 50 bar. In diesen Autoklaven wurde der in I hergestellte Katalysatormonolith um die Rührerachse zentriert eingebaut, so daß er durch den Rührer gleichmäßig mit Flüssigkeit und Gas versorgt wird. Im Reaktorboden befinden sich Zuleitungen für Sauerstoff, Wasserstoff und das Reaktionsmedium. Im Reaktordeckel befindet sich eine Ableitung, aus der das Produkt/Gasgemisch kontinuierlich entnommen wird. Nach Abzug der Volumina für alle Einbauten stand ein effektives Reaktionsvolumen von 208 ml zur Verfügung.

### Beispiel 1

Das Reaktionsmedium bestand aus Methanol, dem 0,4 Gew% Schwefelsäure, 0,1 Gew% Phosphorsäure und 6 ppm Bromid (in Form von Natriumbromid) zugesetzt worden sind. Mit dem Reaktionsmedium wurde der Reaktor geflutet. Anschließend leitete man einen Strom von 72,8 g/h Reaktionsmedium, 48,6 l/h Sauerstoff und 5,5 l/h Wasserstoff (Gase bezogen auf Normalbedingungen) durch den Reaktor. Am Reaktordeckel wurde das Produkt/Gasgemisch kontinuierlich entnommen.

Der Umsatz bezogen auf Wasserstoff betrug 76% (gemäß Bestimmung des Wasserstoffgehaltes im Abgas) bei einer Selektivität von 82%. Die Konzentration der so hergestellten methanolischen Wasserstoffperoxid-Lösung lag bei 7 Gew% (Titration mit KMnO₄ 0,1 N).

### Beispiel 2

Die Herstellung von H₂O₂ wurde unter vergleichbaren Bedingungen wie in Beispiel 1 1000 Stunden betrieben. Insgesamt wurden 2,9 kg Wasserstoffperoxid als methanolische Lösung mit einer Konzentration von 4 Gew.-% erhalten.

### Beispiel 3

Analog I wurde ein Katalysatormonolith aus V4A-Netz mit einer Palladiumbeschichtung hergestellt. Dieser Formling wurde anschließend bei 70°C und 50 bar mit Wasserstoff hydriert, mit methanolischer H₂O₂-Lösung bei 20°C behandelt und mit Stickstoff getrocknet. Der Katalysatorformling wurde anschließend in den Autoklaven aus II eingebaut. Die Reaktion wurde analog Beispiel 1 durchgeführt: Das Reaktionsmedium wurde mit einer Geschwindigkeit von 214,5 g/h, Sauerstoff mit 145,8 l/h und Wasserstoff mit 16,2 l/h bei 42,2°C durch den Reaktor geführt. Der Umsatz bezogen auf H₂ betrug 84%, bei einer Selektivität von 75%. Die Konzentration der hergestellten methanolischen Wasserstoffperoxid-Lösung lag bei 7 Gew%.

### Beispiel 4

Es wurde der gleiche Katalysator wie in Beispiel 3 verwendet. Die Reaktionsparameter waren wie folgt: 214,5 g/h Reaktionsmedium 145,8 L/h Sauerstoff, 6,1 1 Wasserstoff, T = 52°C. Der Umsatz bezogen auf H₂ betrug 90% bei einer Selektivität von 68%. Die Konzentration der so hergestellten Wasserstoffperoxid-Lösung lag bei 2,7 Gew%.

### Beispiel 5

Es wurde der gleiche Katalysator wie in Beispiel 3 verwendet. Das Reaktionsmedium bestand aus Wasser, dem 0,4 Gew.-% Schwefelsäure, 0,1 Gew.-% Phosphorsäure und 6 ppm Bromid (in Form von Natriumbromid) zugesetzt wurden. Die Reaktionsparameter waren wie folgt: 268,0 g/h Reaktionsmedium, 291,6 L/h Sauerstoff, 32,4 L/h Wasserstoff, T = 42°C. Der Umsatz, bezogen auf Wasserstoff, wurde durch eine Wasserstoffbestimmung des Abgases erhalten und betrug 43 % bei einer Selektivität von 70 %. Die Konzentration der so hergestellten Wasserstoffperoxid-Lösung lag bei 5,6 Gew.-%.

## Patentansprüche

1. Verfahren zur Herstellung von Wasserstoffperoxid-Lösungen mit einem Wasserstoffperoxid-Gehalt von wenigstens 2,5 Gew%, durch kontinuierliche Umsetzung von Wasserstoff und Sauerstoff an Katalysatoren, die als aktive Komponente Palladium enthalten, **dadurch gekennzeichnet, daß** die Umsetzung in Wasser und/oder C₁-C₃-Alkanolen als Reaktionsmedium an Katalysatorformkörpern in Form geordneter, in den Reaktor eingebauter Katalysatoren erfolgt, wobei das Reaktionsgas, enthaltend Sauerstoff und Wasserstoff, im Gleichstrom mit der flüssigen Reaktionsphase durch den Reaktor geführt wird.

2. Verfahren nach Anspruch 1, **dadurch gekennzeichnet, daß** die Katalysatorformkörper aus Geweben aufgebaut sind.

3. Verfahren nach Anspruch 2, **dadurch gekennzeichnet, daß** das Gewebe aus Metall besteht.

4. Verfahren nach einem der vorhergehenden Ansprüche, **dadurch gekennzeichnet, daß** die aktive Komponente neben Palladium weitere Edelmetalle als Promotoren enthält.

5. Verfahren nach Anspruch 4, **dadurch gekennzeichnet, daß** das Molverhältnis von Palladium zu Promotormetall im Bereich von 100:1 bis 1:10 liegt.

6. Verfahren nach Anspruch 4 oder 5, **dadurch gekennzeichnet, daß** die Promotoren ausgewählt sind unter Platin, Rhodium, Iridium, Kupfer, Silber und Gold.

7. Verfahren nach einem der vorhergehenden Ansprüche, **dadurch gekennzeichnet, daß** man den Sauerstoff in Form von Luft verwendet.

8. Verfahren nach einem der vorhergehenden Ansprüche, **dadurch gekennzeichnet, daß** das Molverhältnis O₂:H₂ im Abgas oberhalb 20:1 liegt.

9. Verfahren nach einem der Ansprüche 1 bis 8, **dadurch gekennzeichnet, daß** das Reaktionsgas im Kreis geführt wird.

10. Verfahren nach Anspruch 9, **dadurch gekennzeichnet, daß** das Molverhältnis O₂:H₂ im Kreisgas im Bereich von 20:1 bis 50:1 liegt.

11. Verfahren nach einem der vorhergehenden Ansprüche, **dadurch gekennzeichnet, daß** die Umsetzung bei Temperaturen im Bereich von 0°C bis 80°C erfolgt.

12. Verfahren nach einem der vorhergehenden Ansprüche, **dadurch gekennzeichnet, daß** die Umsetzung bei Drücken im Bereich von 10 bis 100 bar durchgeführt wird.

13. Verfahren nach einem der vorhergehenden Ansprüche, **dadurch gekennzeichnet, daß** es sich bei dem Reaktionsmedium um Wasser, Methanol oder um Methanol/Wasser-Mischungen handelt.

14. Verfahren nach einem der vorhergehenden Ansprüche, **dadurch gekennzeichnet, daß** dem Reaktionsmedium Säuren mit einem pKₐ-Wert unterhalb dem der Essigsäure zugesetzt werden.

15. Verfahren nach Anspruch 1, wobei das Reaktionsgas im Reaktor die diskontinuierliche Phase und die flüssige Reaktionsphase die kontinuierliche Phase bildet.

## Claims

1. A process for preparing a hydrogen peroxide solution having a hydrogen peroxide content of not less than 2.5 % by weight by continuous reaction of hydrogen and oxygen over a catalyst comprising palladium as active component, which comprises performing the reaction in water and/or a C₁-C₃-alkanol as reaction medium over a catalytic structure in the form of ordered catalysts installed in the reactor, the reaction gas comprising oxygen and hydrogen passing through the reactor cocurrently with the liquid reaction phase.

2. A process as claimed in claim 1, wherein the catalytic structure is constructed from a woven.

3. A process as claimed in claim 2, wherein the woven is a metallic woven.

4. A process as claimed in any of the preceding claims, wherein the active component includes not only palladium but also a further noble metal as promoter.

5. A process as claimed in claim 4, wherein the molar ratio of palladium to promoter metal is within the range from 100:1 to 1:10.

6. A process as claimed in claim 4 or 5, wherein the promoter is selected from platinum, rhodium, iridium, copper, silver and gold.

7. A process as claimed in any of the preceding claims, wherein the oxygen is used in the form of air.

8. A process as claimed in any of the preceding claims, wherein the molar ratio of O₂:H₂ in the off-gas is above 20:1.

9. A process as claimed in any of claims 1 to 8, wherein the reaction gas is recycled.

10. A process as claimed in claim 9, wherein the molar ratio of O₂:H₂ in the recycle gas is within the range from 20:1 to 50:1.

11. A process as claimed in any of the preceding claims, wherein the reaction is carried out at a temperature within the range from 0°C to 80°C.

12. A process as claimed in any of the preceding claims, wherein the reaction is carried out at a pressure within the range from 10 to 100 bar.

13. A process as claimed in any of the preceding claims, wherein the reaction medium comprises water, methanol or a methanol-water mixture.

14. A process as claimed in any of the preceding claims, wherein the reaction medium further comprises an acid having a pKₐ below that of acetic acid.

15. A process as claimed in claim 1, in which case the reaction gas forms the discontinuous phase in the reactor and the liquid reaction phase the continuous phase.

## Revendications

1. Procédé de préparation de solutions de peroxyde d'hydrogène présentant une teneur en peroxyde d'hydrogène d'au moins 2,5% en poids, au moyen d'une réaction en continu d'hydrogène et d'oxygène sur des catalyseurs qui contiennent le palladium en tant que composant actif, **caractérisé en ce que** l'on réalise la réaction dans l'eau et/ou dans des alcanols en C₁ à C₃ en tant que milieu réactionnel, sur des corps moulés de catalyseur sous forme d'une disposition de catalyseurs qui sont positionnés dans le réacteur, en conduisant le gaz réactionnel contenant l'oxygène et l'hydrogène à travers le réacteur dans le sens du courant de la phase réactionnelle liquide.

2. Procédé selon la revendication 1, **caractérisé en ce que** les corps moulés de catalyseur sont constitués de tissu.

3. Procédé selon la revendication 2, **caractérisé en ce que** le tissu est constitué de métal.

4. Procédé selon l'une quelconque des revendications précédentes, **caractérisé en ce que** le composant actif contient, outre le palladium, des métaux nobles supplémentaires en tant que promoteurs.

5. Procédé selon la revendication 4, **caractérisé en ce que** le rapport molaire entre le palladium et le métal promoteur est compris dans la gamme de 100:1 à 1:10.

6. Procédé selon la revendication 4 ou 5, **caractérisé en ce que** l'on choisit les promoteurs dans le groupe formé par le platine, le rhodium, l'iridium, le cuivre, l'argent et l'or.

7. Procédé selon une quelconque des revendications précédentes, **caractérisé en ce que** l'on met en oeuvre l'oxygène sous forme d'air.

8. Procédé selon l'une quelconque des revendications précédentes, **caractérisé en ce que** le rapport molaire O₂:H₂ dans le gaz résiduaire est supérieur à 20:1.

9. Procédé selon l'une quelconque des revendications 1 à 8, **caractérisé en ce que** l'on conduit le gaz réactionnel en cycle fermé.

10. Procédé selon la revendication 9, **caractérisé en ce que** le rapport molaire O₂:H₂ dans le gaz de recyclage est compris dans la gamme de 20:1 à 50:1.

11. Procédé selon l'une quelconque des revendications précédentes, **caractérisé en ce que** l'on réalise la réaction à une température comprise dans la gamme de 0°C à 80°C.

12. Procédé selon l'une quelconque des revendications précédentes, **caractérisé en ce que** l'on réalise la réaction à une pression comprise dans la gamme de 10 bars à 100 bars.

13. Procédé selon l'une quelconque des revendications précédentes, **caractérisé en ce que** le milieu réactionnel est l'eau, le méthanol ou un mélange constitué d'eau et de méthanol.

14. Procédé selon l'une quelconque des revendications précédentes, **caractérisé en ce que** l'on ajoute au milieu réactionnel des acides présentant une valeur de pKg inférieure à celle de l'acide acétique.

15. Procédé selon la revendication 1, **caractérisé en ce que**, dans le réacteur, le gaz réactionnel constitue la phase discontinue et la phase réactionnelle liquide constitue la phase continue.
